# EUROPÄISCHE PATENTANMELDUNG

(11) **EP 1 659 157 A1**
(43) Veröffentlichungstag der Anmeldung: **24.05.2006**
(21) Anmeldenummer: 05025318.6
(22) Anmeldetag: 21.11.2005
(51) Int. Cl.: C09D 5/22, C09D 201/00, C09D 5/03, C08K 5/00, C08K 13/00

(54) **Intumeszierende Pulverbeschichtung**

(30) Priorität: 23.11.2004 AT 19592004
(71) Anmelder: Horacek, Heinrich, 4048 Linz (AT)
(72) Erfinder: Horacek, Heinrich, 4048 Linz (AT)
(74) Vertreter: Zellentin, Wiger

(57) **Zusammenfassung**

Intumeszierende Pulverbeschichtungen, dadurch gekennzeichnet, dass sie ein Bindemittel auf Basis eines Thermoplasten aus der Gruppe der Polyolefine und plastifiziertem PVC und/oder auf Basis von niedrig schmelzenden Precursom von Duromeren aus der Gruppe der Epoxide, Polyester und Polyurethanvinylether und Intumeszenzadditive, sowie gegebenenfalls anorganischen Pigmente, gegebenenfalls in Kombination mit einem oder mehreren Photoinitiatoren enthalten und deren Verwendung als Brandschutzlacke für Stahl, Aluminium und Holz.

## Beschreibung

Die Erfindung betrifft intumeszierende Pulverbeschichtungen, die entweder aus speziellen Thermoplasten und/oder speziellen niedrig schmelzenden Precursom von Duromeren in Kombination mit Intumeszenzadditiven und anorganischen Pigmenten bestehen.

Zur Beschichtung, beispielsweise von Konstruktionen und Platten aus Stahl, verzinktem Stahl, Aluminium, Vollholz oder Spanholz MDF (medium density fiberboards) für Brandschutztüren, Belüftungs- und Abluftleitungen sind bereits verschiedene Möglichkeiten bekannt. So sind etwa intumeszierende Coatings als wässrige oder lösungsmittelhaltige Anstriche kommerziell erhältlich.
Beide haben den Nachteil, dass sie nicht sauber und verlustfrei wie Pulverbeschichtungen aufgebracht werden können und dass sie nicht so schnell wie UV-härtende Lacke aushärten. Diverse UV-härtende und thermisch härtende Beschichtungen sind ebenfalls bereits bekannt.
So ist beispielsweise aus WO 03/066749 eine UV-härtende, flüssige, intumeszierende Beschichtung bekannt, die ein durorneres Harzsystem in Kombination mit Inturneszenz-additiven und mindestens einem Photoinitiator enthalten. Das duromere Harzsystem beinhaitet vorzugsweise acrylische Oligomere und/oder Monomere. Als Intumeszenzadditive wird eine Kombination aus Säurespender, wie etwa Ammoniumpolyphosphat, Kohlenstoffbildner, wie etwa Pentaerythrit, und einem Treibmittel, wie etwa Melamin, eingesetzt.
WO 02/077110 beschreibt eine thermisch aushärtende, intumeszierende Pulver beschichtung, die aus einem duromeren Bindemittel, bevorzugt einem Epoxyharz, einem Aushärtmittel und einem thermoplastischen Bindemittel, bevorzugt einem Aldehyd- und/oder Ketonharz besteht, wobei noch übliche Additive, wie etwa Melaminphosphat, Melamin, Metallsalze u.s.w. zugesetzt werden.
Auch WO 02/096996 beschreibt eine thermisch aushärtende, intumeszierende Pulverbeschichtung, die aus einer Kombination von duromeren und thermoplastischen Bindemittel besteht und ebenfalls intumeszierende Additive, wie Säurespender, Kohlenstoffbildner und Treibmittel enthält.

Nachteilig bei den bisher bekannten Beschichtungen ist, dass deren Aushärtzeit relativ hoch und die Expansion im Brandfall relativ gering ist.

Aufgabe der vorliegenden Erfindung war es daher, verbesserte intumeszierende Pulverbeschichtungen zu finden, die im Vergleich zum Stand der Technik schneller aushärten und eine höhere Expansion im Brandfall aufweisen.

Unerwarteterweise konnte diese Aufgabe durch eine Pulverbeschichtung auf Basis von speziellen Thermoplasten und/oder speziellen niedrig schmelzenden Precursom von Duromeren in Kombination mit Intumeszenzadditiven und anorganischen Pigmenten gelöst werden, die gegebenenfalls noch einen oder mehrere Photoinitiatoren enthalten.

Gegenstand der Erfindung sind demnach intumeszierende Pulverbeschichtungen, die dadurch gekennzeichnet sind, dass sie ein Bindemittel auf Basis eines Thermoplasten aus der Gruppe der Polyolefine und plastifiziertem PVC und/oder auf Basis von niedrig schmelzenden Precursorn von Duromeren aus der Gruppe der Epoxide, Polyester und Polyurethanvinylether und Intumeszenzadditive, sowie gegebenenfalls anorganischen Pigmente, gegebenenfalls in Kombination mit einem oder mehreren Photoinitiatoren enthalten.

Die erfindungsgemäßen Pulverbeschichtungen enthalten in erster Linie ein spezielles Bindemittel oder Bindemittelgemisch und Intumeszenzadditive.

Als Bindemittel werden erfindungsgemäß spezielle Thermoplasten und/oder spezielle niedrig schmelzende Precursor von Duromeren eingesetzt.

Als Thermoplast eignen sich dabei plastifziertes PVC (PPVC) und Polyolefine, wie etwa Polyethylen, Polypropylen und Ethylenvinylacetatcopolymere (EVA).
Als niedrig schmelzende Precursor eines Duromeren eignen sich Epoxide, Polyester und Polyurethanvinylether.

Das PPVC enthält 20 -60% Weichmacher auf 100% PVC bezogen. Die Weichmacher sind Ester der Phthal- oder Phosphorsäure, beispielsweise Disisodecyiphthalat oder Tributoxyethylphosphät.
Polyethylen kann als low density Polyethylen (LDPE) und/oder linear low density Polyethylen (LLDPE) eingesetzt werden.
Geeignete Polypropylene sind Homopolymere oder Copolymere mit Ethylen. Besonders geeignet sind leicht fließende Typen mit MFI-Werten größer 20 g/10 Minuten bei 210°C/2, 16kp.

Erfindungsgemäß geeignete niedrig schmelzende Precursor von Duromeren sind
a.) Epoxydharze, wie zum Beispiel Diglycidylether von Bisphenol A (DGEBA) oder Tetraglycidyl-4.4'diaminodiphenylmethan (TGDDM), die zusammen mit Diaminen oder Polysäuren als Härter eingesetzt werden. Geeignete Diamine sind Dicyandiamid, Diaminodiphenylmethan, Diaminodiphenylsulfon, u.s.w.; geeignete Polysäuren sind beispielsweise Benzophenontetracarbonsäuren oder Trimellitsäure.
   Geeignete Epoxydharze werden beispielsweise in den Patentanmeldungen EP 0 477 840 A1 (PPG), EP 1055 714 A1 (Sekisui) oder in der US 6,096,812 (Textron) beschrieben,
b.) Polyester, wie etwa ungesättigte Polyester aus Polyolen und Fumaraten und Maleaten, wie Uracross P3125 und Uracross 3135 (Fa. DSM), wie beispielsweise in EP 0371 528 beschrieben, oder gesättigte Polyester, wie Rucote 560 (Fa. Bayer) u.s.w. oder
c.) Polyunethanvinyiether, wie Uracross P 3307 (Fa DSM) oder Uracross P3898.

Erfindungsgemäß wird ein Gemisch aus zwei oder mehreren verschiedenen Duromeren-Precursom oder zwei oder mehreren Thermoplasten verwendet. Es können aber auch Gemische von Thermoplasten und Duromeren-Precursorn eingesetzt werden.

Ein wichtiges Auswahlkriterium für die Duromeren-Precursor und Thermoplasten besteht darin, dass sie vor der Intumeszenztemperatur der Intumeszenzadditive aufschmelzen müssen, nämlich vorzugsweise zwischen 90 und 170°C.

Der Bindemittelanteil in den erfindungsgemäßen Pulverbeschichtungen liegt bei 20 bis 85 Gew.%, bevorzugt bei 30 bis 75 Gew.%.

Die erfindungsgemäßen Pulverbeschichtungen enthalten weiters hoch Intumeszadditive.
Die Intumeszenzadditive bestehen aus drei Komponenten: einem Säurespender, einem Kohlenstoffbildner und einem Treibmittel.
UnterWärmeeinwirkung zersetzt sich 250°C der Säurespender unter Säurebildung. Die Säure reagiert mit dem Kohlenstoffbildner, beispielsweise einem Polyalkohol, zu einem Polyester. Als Säurespender dienen Ammoniumpolyphosphate, Melaminphosphate, Magnesiumsulfate, Borate und Aminsulfonate.
Kohienstoffbildrier sind polyhydroxygruppenhaltige Alkohole, wie Pentaerythrit, Dipentaerythrit, Tripentaerythrit und Stärke. Als Treibmittel werden Melamin, Melaminphosphat, Dicyandiamid und Trishydrazinotriazine eingesetzt.

Der Anteil an Säurespender liegt bei 5 bis 40 Gew.%, bevorzugt bei 10 bis 35 Gew.%. Der Kohlenstoffbildner wird in einer Menge von 2 bis 20 Gew.%, bevorzugt von 4 bis 15 Gew.%; zugesetzt. Die Menge an Treibmittel liegt ebenfalls bei 2 bis 20 Gew.%, bevorzugt von 4 bis 15 Gew.%.

Die Gesamtmenge an Intumeszenzadditiven sollte sich dabei im Rahmen von insgesamt 20 bis 60 Gew.% bewegen.

Die erfindungsgemäße Zusammensetzung enthält gegebenenfalls noch anorganische Pigmente, wie etwa Titandioxid, Siliziumdioxid, Aluminiumtrioxid, Zirkondioxid und Zinkdioxid.
Die Menge an Pigment liegt bei 0 bis 20 Gew. %, bevorzugt bei 4 bis 12 Gew.%.

Soll die Pulverbeschichtung UV-härtend sein, so werden dem Gemisch aus Bindemittel Intumeszenzadditiven und gegebenenfalls Pigmenten ein oder mehrere Photoinitiatoren zugesetzt.
Geeignete Photoinitiatoren sind beispielsweise in WO 03/066749 beschrieben und werden in einer Menge von jeweils 0 bis 5 Gew.%, bevorzugt von 0,1 bis 2 Gew.% zugesetzt.

Bevorzugt werden Pulverbeschichtungen mit einem oder mehreren Photoinitiatoren versetzt, sodass UV-härtende, intumeszierende Pulverbeschichtungen erhalten werden.

Gegebenenfalls können die erfindungsgemäßen Pulverbeschichtungen noch weitere übliche Zusätze, wie etwa Disperüiermittel. Fließmittel, Wachse, Verlaufmittel, Entschäumer, Glanzreduktionsmittel und Texturadditive enthalten.

Die Komponenten der Formulierung sind fest und in Pulver- oder Granulatform. Zur Herstellung der erfindungsgemäßen Pulverbeschichtungen können die einzelnen Komponenten vorher gemischt oder getrennt dem Extruder zugeführt werden. Die Extrusionstemperaturen sind höher als jene der Schmelztemperaturen aber niedriger als jene der Intumeszenztemperaturen. Im Extruder erfolgt die feine Dispergierung der Pigmente in den Harzen. Die extrudierten Materialien werden unter Verwendung von Kühlwalzen zu Filmen mit 1- 5 mm Dicke ausgewalzt. Die Filme werden gebrochen und in geeigneten Mühlen zu Pulver mit Teilchengrößen zwischen 20- 400µm vermahlen.

Die Aufbringung der beschriebenen Pulver auf den zu schützenden Stahlkonstruktionen (Substrat) geschieht durch elektrostatisches Aufsprühen, wobei Spritzdüsen mit Coronabehandlung für metallische Substrate oder Tribopistolen für besonders hohe Schichtstärken eingesetzt werden, im Fließbett, durch Heißflammensprühen oder durch Aufbringen von Pulveraufschlämmungen.
Beim elektrostatischem Aufsprühen können Dicken von mehr als 1 mm erzielt werden, sofern das Substrat heiß genug ist und die Pulver im Temperaturbereich von 100 bis 200 ° C schmelzen. Im Fließbett können ebenfalls Dicken von über 1 mm erreicht werden.
Das Heißflammensprühen erlaubt unbegrenzte Schichtdicken durch Vielschichtenaufbau. Bei dieser Anwendung werden die Pulverteilchen in einer Propanflamme geschmolzen und auf ein Substrat als Film aufgetragen. Pulveraufschlämmungen werden vor allem als wässrige Pulverdispersionen eingesetzt. Die Dispersionen können airless oder anders gesprüht werden. Auch diese Methode erlaubt Schichtstärken über 1 mm. Nach dem Trocknen können die Filme gemäß der Pulvertechnologie erhitzt werden.

Das Aushärten erfolgt entweder thermisch, über Erstarren der Schmelze oder zusätzlich durch UV-Strahlenvemetzung.
In Vergleichsversuchen mit bisher üblichen Coatings (rein UV-härtende Beschichtungen bzw. rein thermisch härtende Beschichtungen), wie etwa aus WO 03/066749 und WO 02/077110 bekannt, zeigte sich, dass die erfindungsgemäßen Zusammensetzungen zu Pulverbeschichtungen führen, die eine höhere Expansion unter Brandeinwirkung aufweisen und zudem, insbesondere bei Zusatz von Photoinitiatoren, nach dem Aufbringen wesentlich schneller trocknen, sodass sich die erfindungsgemäßen Pulverbeschichtungen ausgezeichnet als Brandschutrlacke für Substrate aus Stahl, verzinktem Stahl, Aluminium und Holz eignen.

### Beispiele 1-8, sowie Vergleichsversuche V1-V4:

Folgende Einsatzstoffe wurden verwendet:
1.) Multifunktionelles aromatisches Acrylat CN 131 (Cray Valley)
2.) Multifunktionelles aliphatisches Acrylat Photometer 4810 (Cognis)
3.) Epoxid DER 663 UE (Dow)
4.) Phenolharz DEH 82 (Dow)
5.) Ketonharz Laropal A 81 (BASF)
6.) Polyester Rucote 560 (Bayer)
7.) Polyurethanacrylat (PUA) Roskydal LS 2266 (Bayer)
8.) PPVC PPVC Rottolin 02535 (Rottolin)
9.) Polyurethanvinylether, weich (PUVE) Uracross P 3898 (DSM)
10.) Polyurethanvinylether, hart (PUVE) Uracross P 3307 (DSM)
11.) ungesättigter Polyester Uracross P3125 (DSM)
11a.) ungesättigter Polyester Uracross P3135 (DSM)
12.) Photoinitiator Phenyl-bis-(2,4,6-trimethylbenzoyl)-phosphinoxid Irgacure 819 (Ciba Speciality Chemicals)
13.) Photoinitiator Bisacylphosphinoxid Irgacure 1800 (Ciba Speciality Chemicals)
14.) Photoinitiator Hydroxyacetophenon irgacure184 (Ciba Speciality Chemicals)
15.) Photoinitiator 2-Hydroxy-2-methyl-1-phenylpropanon-1 Darocure 1173 (Ciba Speciality Chemicals)
16.) Photoinitiator 4-(2-hydroxyethoxyl)phenyl-2-hydroxy-2-methylpropyl)keton Irgacure 2959
17.) Fließmittel Resiflow PV5/Wodee Add 902 = 2/1
18.) Ammoniumpolyphosphat APP
19.) Polyethylen (PE) FT 7245 (Borealis)

Auf einem Zweischneckenextruder mit nachgeschalteten Kühlwalzen wurden bei Extrusionstemperaturen von 180 ― 200°C Filme aus den unten angegebenen Formulierungen hergestellt. Nach der Vermahlung lagen Pulver mit Kömungen um 50 -100 µm vor.

Folgende Formulierungen wurden hergestellt:

| **Beispiel** | **1** | **2** |
|---|---|---|
| | (Gew.%) | (Gew.%) |
| Aggregatzustand | fest | fest |
| Bindemittel 1 | 12 Polyester 6.) | 70 PPVC |
| Bindemittel 2 | 9 Epoxid 3.) | |
| APP | 30 | 15 |
| Melamin | 12 | 5 |
| Pentaerythrit | 10 | 5 |
| Titandioxid | 10 | 5 |
| Photoinitiator 12.) | 1 | |
| Photoinitiator 15.) | 1 | |

| **Beispiel** | **3** | **4** |
|---|---|---|
| | (Gew.%) | (Gew.%) |
| Aggregatzustand | fest | fest |
| Bindemittel 1 | 36,5 Polyester 11) | 43,7 Polyester 11.) |
| Bindemittel 2 | 30,8 PUVE 10.) | 4,6 PUVE 10.) |
| Bindemittel 3 | | 19,0 PUVE 9.) |
| APP | 15 | 15 |
| Melamin | 5 | 5 |
| Pentaerythrit | 5 | 5 |
| Titandioxid | 5 | 5 |
| Fließmittel 17.) | 0,7 | 0,7 |
| Photoinitiator 13.) | 1 | 1 |
| Photoinitiator 14.) | 1 | 1 |

| **Beispiel** | **5** | **6** |
|---|---|---|
| | **(Gew%)** | **(Gew%)** |
| Aggregatzustand | fest | fest |
| Bindemittel 1 | 35 PPVC | |
| Bindemittel 2 | 18 Polyester 11.) | 35 Polyester 6.) |
| Bindemittel 3 | 15 PUVE 10.) | 23 Epoxid 3.) |
| APP | 15 | 18 |
| Melamin | 5 | 6 |
| Pentaerythrit | 5 | 6 |
| Titandioxid | 5 | 10 |
| Photoinitiator 12.) | 1 | 1 |
| Photoinitiator 16.) | 1 | 1 |

| **Beispiel** | **7** | **8** |
|---|---|---|
| | **(Gew%)** | **(Gew%)** |
| Aggregatzustand | fest | fest |
| Bindemittel 1 | 35 PE 19.) | 30 PPVC |
| Bindemittel 2 | 18 Polyester 11.) | 20 Polyester 6.) |
| Bindemittel 3 | 15 PUVE 10.) | 18 Epoxid 3.) |
| APP | 15 | 15 |
| Melamin | 5 | 5 |
| Pentaerythrit | 5 | 5 |
| Titandioxid | 5 | 5 |
| Photoinitiator 12.) | 1 | 1 |
| Photoinitiator 16.) | 1 | 1 |

| **Vergleichsbelsplel** | **V1** | **V2** |
|---|---|---|
| | **(Analog WO 03/066749)** | **(Analog WO 02/077110)** |
| | (Gew.%) | (Gew.%) |
| Aggregatzustand | flüssig | fest |
| Bindemittel 1 | 36 mf aromat Acrylat 1.) | 15 Epoxid 3.) |
| Bindemittel 2 | 4 mf aliphat. Acrylat 2.) | 5 Phenolharz 4.) |
| Bindemittel 3 | | 14 Ketonharz 5.) |
| APP | 30 | 30 |
| Melamin | 11,5 | 14 |
| Pentaerythrit | 8,5 | 14 |
| Titandioxid | | 6 |
| Quarz | 6,0 | |
| Wachs | | 3 |
| Dispergiermittel | 1 | |
| Photoinitiator 12.) | 1,5 | |
| Photoinitiator 15.) | 1,5 | |

| **Vergleichsbeispiel** | **V3** | **V4** |
|---|---|---|
| | (Gew%) | (Gew%) |
| Aggregatzustand | flüssig | fest |
| Bindemittel 1 | 33 PUA 7.) | 16,6 Epoxid 3.) |
| Bindemittel 2 | | 24,9 Polyester 6.) |
| APP | 30 | 25,4 |
| Melamin | 15 | 8,3 |
| Pentaerythrit | 12 | 8,3 |
| Titandioxid | 9,8 | 16,5 |
| Photoinitiator 15.) | 0,2 | |

Die Pulverlacke wurden entweder im Fließbett aufgebracht, wobei die Stahlplatte eine Temperatur von 90 -150°C aufwies (Beispiel 2) oder auf geerdete Stahlplatten elektrostatisch versprüht und bei 150°C während 30 Minuten verfilmt und gehärtet (Beispiele 1, 3 - 8, V2, V4).
Die UV- Vernetzung erfolgte mit einer Quecksilber-Gallium-Lampe bei 1.700-2.900 mJ/cm2 Energieeintrag.
Die flüssigen Vergleichsversuche (V1, V3) wurden auf die Stahlbleche aufgestrichen oder aufgesprüht.
Die Filmdicken lagen bei 300- 500 µm.
Die Expansionshöhe wurde an den Stahlplatten bei 550°C nach 15 Minuten gemessen.

| Beispiel | Expansionsfaktor 550°C/15 Minuten | Härtungsgeschwindigkeit (min) |
|---|---|---|
| V1 | 20 | 20 |
| V2 . | 5 | 30 |
| V3 | 20 | 20 |
| V4 | 10 | 25 |
| Bsp.1 | 20 | 5 |
| Bsp.2 | 30 | 20 |
| Bsp.3 | 25 | 2 |
| Bsp.4 | 28 | 2 |
| Bsp.5 | 30 | <1 |
| Bsp.6 | 20 | 1 |
| Bsp.7 | 30 | < 1 |
| Bsp.8 | 40 | 2 |

## Patentansprüche

1. Intumeszierende Pulverbeschichtungen, **dadurch gekennzeichnet, dass** sie ein Bindemittel auf Basis eines Thermoplasten aus der Gruppe der Polyolefine und plastifiziertem PVC und/oder auf Basis von niedrig schmelzenden Precursom von Duromeren aus der Gruppe der Epoxide, Polyester und Polyurethanvinylether und Intumeszenzadditive, sowie gegebenenfalls anorganischen Pigmente, gegebenenfalls in Kombination mit einem oder mehreren Photoinitiatoren enthalten.

2. Intumeszierende Pulverbeschichtungen nach Anspruch 1, **dadurch gekennzeichnet, dass** der Bindemittelanteil bei 20 bis 85 Gew.%, der Anteil an Intumeszenzadditiven bei 20 bis 60 Gew.%, die Menge an Pigment bei 0 bis 20 Gew.% und der Anteil an Photoinitiatoren bei 0,1 bis 5 Gew.% liegt.

3. lntumeszierende Pulverbeschichtungen nach Anspruch 1, **dadurch gekennzeichnet, dass** als Intumeszenzadditive ein Säurespender aus der Gruppe der Ammoniumpolyphosphate, Melaminphosphate, Borate und Aminsulfate, ein Kohlenstoffbildner aus der Gruppe der polyhydroxygruppenhaltigen Alkohole und Stärke und ein Treibmittel aus der Gruppe Melamin, Melaminphosphat, Dicyandiamid und Trishydrazinotriazine eingesetzt werden.

4. Intumeszierende Pulverbeschichtungen nach Anspruch 1, **dadurch gekennzeichnet, dass** als Pigmente Titandioxid, Siliziumdioxid, Aluminiumtrioxid, Zirkondioxid oder Zinkdioxid eingesetzt werden.

5. Verwendung von intumeszierenden Pulverbeschichtungen nach Anspruch 1 als Brandschutzlacke für Stahl, Aluminium und Holz.

6. Verwendung nach Anspruch 5, **dadurch gekennzeichnet, dass** die Pulverbeschichtungen durch elektrostatisches Aufsprühen, Heißflammensprühen, als Pulveraufschlämmungen oder im Fließbett aufgebracht werden.
